# NEUE EUROPÄISCHE PATENTSCHRIFT

(11) **EP 1 155 802 B2**
(45) Veröffentlichungstag und Bekanntmachung des Hinweises auf die Entscheidung über den Einspruch: **14.11.2007**
(45) Hinweis auf die Patenterteilung: 18.02.2004
(21) Anmeldenummer: 01119587.2
(22) Anmeldetag: 25.11.1998
(51) Int. Cl.: B29C 45/17, B29C 45/16, B29C 45/04

(54) **Haltevorrichtung für eine Form, Formhälfte oder einen Formträger in einer Spritzgiessmaschine und ein Formträger zum Einsetzen in eine Haltevorrichtung**
Holding device for a mould, mould half or a mould carrier in an injection moulding machine and a mould carrier for use in a holding device
Dispositif de fixation pour un moule, moitié de moule ou un support de moule dans une machine à mouler par injection et un support de moule pour l'utilisation dans un dispositif de fixation

(30) Priorität: 03.12.1997 EP 97121248
(43) Veröffentlichungstag der Anmeldung: 21.11.2001
(62) Teilanmeldung aus: 98963513.1
(73) Patentinhaber: FOBOHA GmbH, D-77716 Haslach (DE)
(72) Erfinder: Bodmer, Werner, 77716 Haslach (DE); Armbruster, Rainer, 77709 Wolfach (DE)
(74) Vertreter: Rentsch, Rudolf A.

(56) Entgegenhaltungen:
- EP-A- 0 249 703
- EP-A- 0 549 928
- EP-A- 0 895 848
- DE-U- 8 120 618
- PATENT ABSTRACTS OF JAPAN vol. 18, no. 91 (E-1508), 15. Februar 1994 (1994-02-15) & JP 05 299458 A (MITSUBISHI ELECTRIC CORP), 12. November 1993 (1993-11-12)

## Beschreibung

Die Erfindung betrifft eine Haltevorrichtung für Formen, Formhälften oder Formträger in einer Spritzgiessmaschine, ferner einen Formträger, einsetzbar in diese Haltevorrichtung, ferner eine Spritzgiessmaschine, beinhaltend diese Haltevorrichtung, und ausserdem ein Verfahren zum Entfernen bzw. Einsetzen einer Form, Formhälfte oder eines Formträgers gemäss den Oberbegriffen der unabhängigen Patentansprüche.

Bekannte Spritzgiessmaschinen haben oft den Nachteil von hohen Rüst/ oder Umrüstzeiten und kosten, weil das Einsetzen, Entfernen oder Auswechseln von Formen kompliziert und zeitaufwendig ist. Die Form, Formhälfte bzw. ihr Träger ist ja bei den bekannten Spritzgiessmaschinen ein Teil der Maschine selbst; das bedeutet, dass bei einem Formwechsel ein Maschinenteil ausgewechselt werden muss. Dies wird durch die Tatsache erschwert, dass zwecks Kühlung, Hydraulikbetätigung etc. verschiedene Medien wie elektrischer Strom, Wasser (kalt und heiss), Öl (kalt und heiss), Luft und/oder andere Gase in die Spritzgiessform eingeleitet werden. Die entsprechenden Zu und Abführleitungen sind an der Form bzw. den Formhälften angeschlossen; bei einem Formwechsel müssen sie von der alten Form gelöst und an der neuen Form befestigt werden. Diese Prozedur braucht Zeit und Arbeitskräfte. Der Einsatz herkömmlicher Spritzgiessmaschinen ist entsprechend kostspielig und wenig flexibel, wenn die Formen häufig gewechselt werden müssen. Moderne Spritzgiessbetriebe müssen jedoch in der Lage sein, Spritzgiessformen einfach und rasch auszuwechseln, um ihre Produktion sofort sich ändernden Kundenwünschen und anderen sich ständig ändernden Forderungen und Bedingungen anzupassen.

Für viele Anwendungen des Spritzgiessverfahrens ist es vorteilhaft, wenn die Spritzgiessform oder eine Hälfte derselben relativ zur Spritzgiessmaschine drehbar ist. Mit einer solchen drehbaren Form besteht z. B. die Möglichkeit, zu verarbeitende Schmelze (bspw. Kunststoffschmelze) aus mehreren (typischerweise zwei gegenüberliegenden) Einspritzstationen in die Form einzuspritzen. Damit können erstens gleichzeitig Formteile mit verschiedenen Geometrien, verschiedenen Farben oder aus verschiedenen Materialien hergestellt werden. Damit können zweitens auch Formteile aus mehreren Komponenten hergestellt werden (Mehrkomponentenverfahren), also Formteile, welche verschiedene Farben aufweisen oder aus mehreren Materialien bestehen (Montagespritzguss). Wenn nur eine Einspritzstation verwendet wird, bringt eine drehbare Form den Vorteil von schnelleren Zykluszeiten. Nach einem ersten Einspritzzyklus kann nämlich die Form gedreht werden, und die soeben eingespritzten Formteile können abkühlen und ausgestossen werden, während bereits ein zweiter Einspritzzyklus stattfindet. Bei drehbaren Formen stehen mehr Kavitäten zur Verfügung als bei nicht drehbaren Formen. Ausserdem erlauben drehbare Formen Zwischenstationen für verschiedene Optionen.

Spritzgiessmaschinen mit drehbaren Formen oder Formhälften sind bekannt. So offenbart bspw. das Patent US4,330,257 eine Spritzgiessmaschine mit zwei relativ zueinander beweglichen Formaufspannplatten und einem dazwischen liegenden Kernträgerkörper, welcher mindestens vier Seitenflächen hat und um eine Achse senkrecht zur Bewegungsrichtung der Formaufspannplatten drehbar ist. Auf beiden Formaufspannplatten befinden sich erste Formhälften mit formgebenden Hohlräumen; die Seitenflächen des Kernträgerkörpers sind mit fingerartigen Ausformungen versehen und bilden zusammen mit diesen Fingern zweite Formhälften. Werden die beiden Formaufspannplatten gegen den Kernträgerkörper gepresst, so werden die ersten und zweiten Formhälften zu Formen zusammengefügt, in welche aus zwei Einspritzstationen Schmelze eingespritzt wird. Die so entstandenen Formteile werden auf den Fingern aus den Hohlräumen entfernt.

Die Patentschrift DE36 20 175 offenbart eine Spritzgiessmaschine mit mindestens zwei Plastifizier- und Einspritzeinheiten und zwei Formaufspannplatten. Die eine Formaufspannplatte ist fest, die andere auf Holmen verschiebbar. Zwischen den Formaufspannplatten befindet sich ein drehbarer und ebenfalls verschiebbarer prismatischer Kernträgerkörper. Auf den Formaufspannplatten befinden sich erste, auf dem Kernträgerkörper zweite Formhälften der Spritzgiessformen. Durch Verschieben der verschiebbaren Formaufspannplatte und des Kernträgerkörpers werden die ersten und zweiten Formhälften zu einer Spritzgiessform zusammengefügt.

Die Europäische Patentanmeldung EP 0 895 848 (fortan EP'848) beansprucht die Priorität von DE19733667. Das Prioritätsdatum von EP'848 liegt zwar vor dem Prioritätsdatum dieser Anmeldung, EP'848 wurde jedoch erst nach dem Anmeldedatum dieser Patentanmeldung publiziert. Aus diesem Grund stellt EP'848 einen Stand der Technik gemäss Art. 54 (3) EPÜ dar.

EP'848 betrifft eine Vorrichtung zur Herstellung von Spritzgiessartikeln aus mindestens zwei Kunststoftschmelzen. Eine zwischen einer feststehenden Formaufspannplatte und einer verfahrbaren Formaufspannplatte angeordnete weitere verfahrbare und verschwenkbare Formaufspanneinrichtung dient zum Tragen einer weiteren Formhälfte. Die weitere Formaufspanneinrichtung besteht aus zwei übereinander angeordneten, an jeweils mindestens zwei Holmen geführten stabilen Trägerblöcken mit jeweils einem Gleit- oder Drehlager für die im wesentlichen vertikal ausgerichtete Drehachse eines prismenförmigen Formhälftenträgers, sowie mindestens zwei Antriebseinrichtungen zur Veränderung des jeweiligen relativen Abstands zwischen den Formaufspannplatten und jedem Trägerblock besteht.

Bei solchen Spritzgiessmaschinen mit drehbaren Formen oder Formhälften macht sich der Nachteil der hohen Umrüstzeiten wegen schwer auswechselbarer Formen besonders deutlich bemerkbar. Die Formen oder Formhälften sind jeweils mit einem Drehmechanismus verbunden, dessen Entfernung von den Formen oder Formhälften den Formwechsel zusätzlich erschwert.

Es ist Aufgabe der vorliegenden Erfindung, eine Haltevorrichtung für eine Form, Formhälfte oder einen Formträger in einer Spritzgiessmaschine zu schaffen, welche die Rüst- und Umrüstzeiten massgeblich verkürzt, welche also ein einfaches und rasches Entfernen, Einsetzen bzw. Auswechseln der Form, Formhälfte oder des Formträgers ermöglicht. Ferner soll ein in diese Haltevorrichtung einsetzbarer Formträger geschaffen werden. Ferner soll eine Spritzgiessmaschine geschaffen werden, welche die obigen Nachteile nicht aufweist und bei welcher insbesondere kurze Rüst und Umrüstzeiten möglich sind. Ausserdem soll ein Verfahren zum einfachen und raschen Entfernen, Einsetzen bzw. Auswechseln der Form, Formhälfte oder des Formträgers angegeben werden.

Die Aufgabe wird gelöst durch die erfindungsgemässe Haltevorrichtung, den erfindungsgemässen Formträger, und die erfindungsgemässe Spritzgiessmaschine, wie sie durch die unabhängigen Patentansprüche definiert sind.

Die Erfindung bricht mit dem herkömmlichen Konzept, gemäss welchem die Spritzgiessform bzw. ihr Träger ein Bestandteil der Spritzgiessmaschine selbst ist Statt dessen betrachtet sie die Spritzgiessform, die Formhälfte bzw. ihren Träger als Modul, welches in die Spritzgiessmaschine eingesetzt werden und beliebig ausgewechselt werden kann. Zu diesem Zweck wird eine Haltevorrichtung für mindestens eine Form, Formhälfte oder einen Formträger in einer Spritzgiessmaschine geschaffen. Diese Haltevorrichtung weist mindestens zwei relativ zueinander verschiebbare und eventuell drehbare Haltevorrichtungen zum lösbaren Einspannen der Form, Formhälfte oder des Formträgers auf. Die Haltevorrichtung, nicht die Form selbst, ist ein Bestandteil der Spritzgiessmaschine. An der erfindungsgemässen Haltevorrichtung sind alle benötigten Medienleitungen fest angeschlossen. Hingegen können verschiedene Spritzgiessformen ohne Aufwand in Haltemittel der Haltevorrichtung eingesetzt und wieder ausgewechselt werden. Die verlustlose Übergabe der verschiedenen Medien von der Haltevorrichtung in die Form und umgekehrt ist durch normierte Schnittstellen gewährleistet.

Eine bevorzugte Ausführungsform der erfindungsgemässen Haltevorrichtung beinhaltet zwei Verschiebeeinheiten, auf welchen je eine Dreheinheit angebracht ist. Auf jeder Dreheinheit befinden sich Haltemittel für Formen, Formhälften oder deren Träger. Die Verschiebeeinheiten sind relativ zueinander in einer Richtung verschiebbar, bspw. auf je zwei zueinander parallelen Holmen. Jede Dreheinheit ist derart auf der jeweiligen Verschiebeeinheit drehbar befestigt, dass sie mit der Verschiebeeinheit verschiebbar und um eine mit it der Verschiebeeinheit verschiebbare, zur Verschieberichtung senkrechten Achse drehbar ist. Die Haltemittel sind derart an den Verschiebeeinheiten angebracht, dass sie einander gegenüberliegen, ihre Achsen zusammenfallen und die Haltemittel einen bestimmten Abstand voneinander aufweisen, wenn sich die zwei Verschiebeeinheiten in einer bestimmten gegenseitigen Lage befinden. In dieser einen bestimmten gegenseitigen Lage kann in den Abstand zwischen den beiden Haltemitteln eine Form, eine Formhälfte oder ein Formträger reversibel eingespannt werden.

Die in die erfindungsgemässe Haltevorrichtung eingesetzte Form, die Formhälfte oder der Formträger in der Haltevorrichtung kann in einer Richtung verschoben und um eventuell eine zu dieser Richtung senkrechte, verschiebbare Achse gedreht werden. Die Verschiebung der Haltevorrichtung kann mittels bspw. hydraulischer und/oder elektrischer Antriebsmittel betätigt und mit Kontroll oder Steuermitteln kontrolliert oder gesteuert werden. Die Drehung der Haltemittel kann mittels bspw. Drehantriebsmittel betätigt und mit Drehkontroll oder Drehsteuermitteln kontrolliert oder gesteuert werden.

Ein erfindungsgemässer Formträger ist vorzugsweise als prismatischer Drehblock ausgebildet, dessen beiden Grundflächen den beiden Haltemitteln zugewandt sind. Der Drehblock weist mindestens zwei Seitenflächen auf, wobei mindestens eine Seitenfläche eine Spritzgiessform oder eine Spritzgiessformhälfte trägt.

Die erfindungsgemässe Haltevorrichtung wird vorzugsweise zwischen zwei Formaufspannplatten einer Spritzgiessmaschine eingesetzt. Dabei ist vorzugsweise eine Formaufspannplatte fest mit der Maschine verbunden, die andere Formausfspannplatte in derselben Richtung wie die Verschiebeeinheiten der Haltevorrichtung verschiebbar. Die Formaufspannplatten tragen je eine erste Formhälfte. Mindestens eine, vorzugsweise aber zwei oder mehr Seitenflächen des prismatischen Drehblocks tragen zweite Formhälften. Erste und/oder zweite Formhälften sind mit formgebenden Hohlräumen ausgestattet. Wenn die Formaufspannplatten gegen den Drehblock gepresst werden, fügen sich die ersten und zweiten Formhälften zu Spritzgiessformen zusammen, in welche aus Einspritzstationen Schmelze eingespritzt werden kann.

Zum Entfernen einerForm, Form hälfte oder eines Formträgers aus der erfindungsgemässen Haltevorrichtung werden die Haltemittel relativ zueinander so weit verschoben, dass sie die Form, Formhälfte oder den Formträger freigeben. Daraufhin wird die Form, Formhälfte oder der Formträger aus der Haltevorrichtung entnommen.

Zum Einsetzen einer Form, Formhälfte oder eines Formträgers in die erfindungsgemässe Haltevorrichtung werden die Haltemittel relativ zueinander so weit verschoben, dass sie einen das Einsetzen der Form, Formhälfte oder des Formträges erlaubenden Abstand voneinander aufweisen. Die Form, Formhälfte oder der Formträger wird in die Haltevorrichtung eingesetzt. Daraufhin werden die Haltemittel relativ zueinander in die eine bestimmte gegenseitige Lage verschoben, so dass sie die Form, Formhälfte oder den Formträger einspannen.

Die erfindungsgemässe Haltevorrichtung lässt sich in bereits bestehende Spritzgiessmaschinen einbauen. Sie weist sowohl die Vorteile der bekannten Spritzgiessmaschinen mit drehbaren Formen als auch den Vorteil des einfachen Formwechsels auf.

Im folgenden wird eine bevorzugte Ausführungsform der erfindungsgemässen Haltevorrichtung innerhalb eines Teils einer Spritzgiessmaschine anhand von Figuren detailliert beschrieben. Dabei zeigen:
- Fig. 1: eine Draufsicht auf eine erste Ausführungsform der erfindungsgemässen Haltevorrichtung innerhalb eines Teils einer Spritzgiessmaschine,
- Fig. 2: eine Frontalansicht der Haltevorrichtung von Fig. 1,
- Fig. 3: eine teilweise geschnittene Frontalansicht einer zweiten Ausführungsform der erfindungsgemässen Haltevorrichtung und
- Fig. 4: eine Draufsicht auf einen Teil der Haltevorrichtung von Fig. 3.

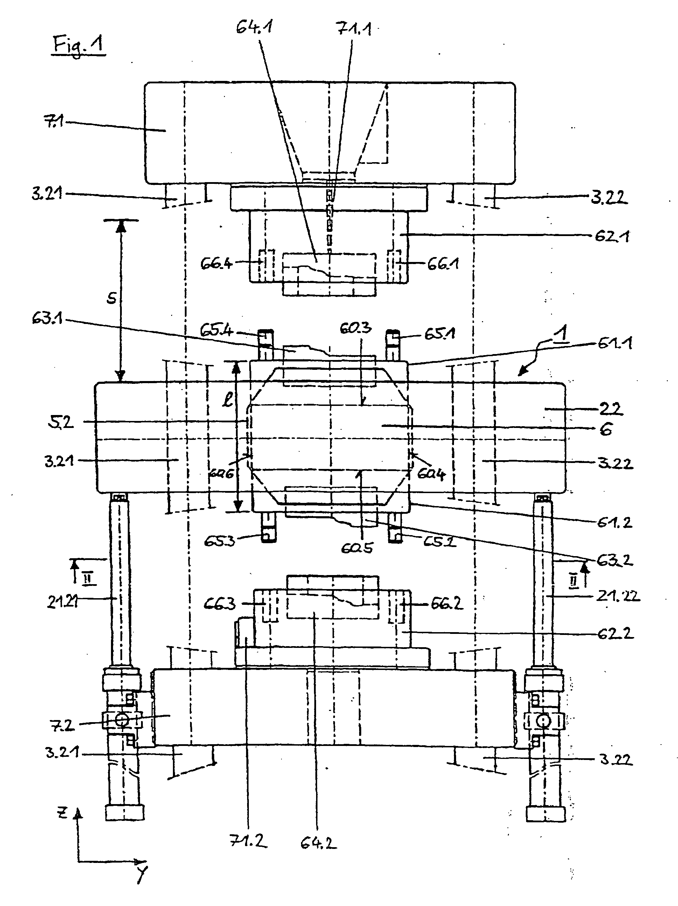

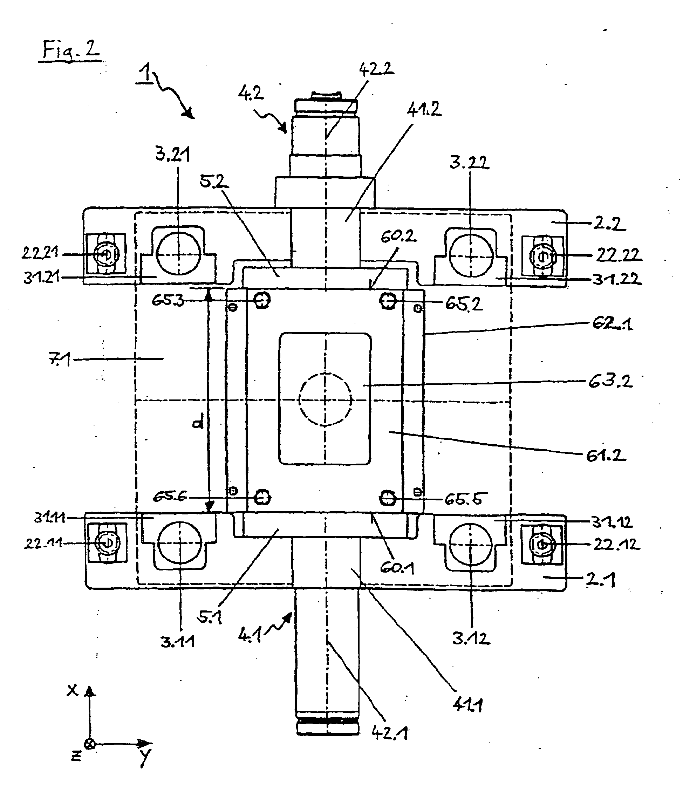

Die in den Figuren 1 und 2 dargestellte Ausführungsform der erfindungsgemässen Haltevorrichtung 1 beinhaltet eine erste Verschiebeeinheit 2.1 und eine zweite Verschiebeeinheit 2.2. Die Verschiebeeinheiten 2.1, 2.2 sind bspw. als Metallplatten ausgebildet. Sie werden von je zwei zueinander parallelen Holmen 3.11, 3.12, 3.21, 3.22 getragen und sind auf diesen mit Hilfe von Führungen 31.11, 31.12, 31.21, 31.22, bspw. zylindrischen Gleitführungen, linear geführt, so dass sie parallel zueinander in einer Richtung z verschiebbar sind. Die Verschiebung kann durch (nicht dargestellte) Kontroll oder Steuermittel wie hydraulische, mechanische oder elektronische Wegmesssysteme, Endschalter etc. kontrolliert und/oder gesteuert werden. Auf der ersten Verschiebeeinheit 2.1 ist eine erste Dreheinheit 4.1 und an der zweiten Verschiebeeinheit 2.2 ist eine zweite Dreheinheit 4.2 befestigt. Jede Dreheinheit 4.1, 4.2 ist mit der jeweiligen Verschiebeeinheit 2.1, 2.2 verschiebbar; mindestens ein Teil einer jeden Dreheinheit 4.1, 4.2, bspw. eine Welle 41.1, 41.2, ist um eine mit der Verschiebeeinheit 2.1, 2.2 verschiebbare, zur Verschieberichtung z senkrechten Achse 42.1, 42.2 drehbar. Die Drehung der Dreheinheiten 4.1, 4.2 kann bspw. hydraulisch und/oder elektrisch betätigt werden, bspw. mit (nicht eingezeichneten) Drehantriebsmitteln wie einer Hydraulik oder einem Servomotor. Die Drehantriebsmittel können auf einer einzigen Verschiebeeinheit2.2 oder auch auf beiden Verschiebeeinheiten 2.1, 2.2 angebracht sein. Zwischen den Drehantriebsmittein und der Dreheinheit 4.1, 4.2 kann ein Getriebe und/oder eine Kupplung (nicht dargestellt) vorgesehen sein. Die Drehung der Dreheinheiten 4.1, 4.2 kann mit Hilfe von (nicht dargestellten) Drehkontroll- oder Drehsteuermitteln wie Drehgebern, Endschaltern etc. kontrolliert und/oder gesteuert werden.

An den Dreheinheiten 4.1, 4.2, bspw. an den einen Enden der Wellen 41.1, 41.2, sind Haltemittel 5.1 , 5.2 für erste Formhälften 61.1, 61.2 oder Formträger 6 befestigt. Die Haltemittel 5.1, 5.2 können bspw. als Trägerplatten mit entsprechenden (nicht detailliert dargestellten) reversiblen Befestigungsmitteln ausgebildet sein. Die Verschiebeeinheiten 2.1, 2.2 sind derart gegenseitig angeordnet bzw. verschiebbar, dass in einer bestimmten gegenseitigen Lage der Verschiebeeinheiten 2.1,2.2 die beiden Dreheinheiten 4.1, 4.2 einander gegenüberliegen, ihre Achsen 42.1, 42.2 zusammenfallen und die beiden Haltemittel 5.1, 5.2 einen bestimmten Abstand d voneinander aufweisen. Die Figuren 1 bis 4 zeigen die Verschiebeeinheiten 2.1, 2.2 in dieser einen bestimmten gegenseitigen Lage.

In den Abstand d zwischen den beiden Haltemitteln 5.1, 5.2 ist ein prismatischer Drehblock 6 eingesetzt. In diesem Ausführungsbeispiel hat der Drehblock 6 die Form eines Würfels mit zwei Grundflächen 60.1, 60.2 und vier (nicht notwendigerweise gleich grossen) Seitenflächen 60.3 bis 60.6; er könnte jedoch auch eine andere, vorzugsweise gerade Anzahl Seitenflächen aufweisen. Die beiden Grundflächen 60.1, 60.2 des Drehblocks 6 sind den beiden Dreheinheiten 4.1, 4.2 zugewandt. Der Drehblock 6 in der Haltevorrichung 1 kann in einer Richtung z verschoben und um eine zu dieser Richtung z senkrechte, verschiebbare Achse gedreht werden; diese Achse ist durch die zusammenfallenden Achsen 42.1, 42.2 der Dreheinheiten 4.1, 4.2 definiert. Wenn der Drehblock 6 eingesetzt ist, verbindet er die beiden Dreheinheiten 4.1, 4.2 drehfest miteinander; deshalb genügt ein einziges Drehantriebsmittel zur Drehung beider Dreheinheiten 4.1, 4.2 und des Drehblocks 6.

Das Öffnen der erfindungsgemässen Haltevorrichtung 1 geschieht beispielsweise, indem die zweite, obere Verschiebeeinheit 2.2 gegenüber der den Drehblock 6 tragenden ersten, unteren Verschiebeeinheit 2.1 eine genügend grosse Wegstrecke s weit verschoben wird. Genügend gross heisst, dass die Wegstrecke s grösser sein muss als die Länge 1 des Drehblocks 6, d. h. s > 1. Ein solcher verschobener oder offener Zustand der Haltevorrichtung 1 erlaubt einen schnellen und einfachen Ausbau bzw. Wechsel des Drehblocks 6.

Zum Einspannen des Drehblocks 6 kann bspw. die zweite, obere Dreheinheit 4.2 wie ein Stempel in x-Richtung beweglich sein. Zum Entfernen des Drehblocks 6 wird die zweite Dreheinheit 4.2 zunächst eine kleine Wegstrecke nach oben, in +x-Richtung, gefahren; dann wird die zweite Verschiebeeinheit 2.2 bspw. in +z-Richtung verschoben und der Drehblock 6 entfernt. Zum Einsetzen des Drehblocks 6 wird der Drehblock auf das erste Haltemittel 5.1 aufgesetzt, die zweite Verschiebeeinheit 2.2 durch Verschieben bspw. in z-Richtung in die eine bestimmte Lage mit der ersten Verschiebeeinheit 2.1 gebracht, so dass die Achsen 42.1, 42.2 zusammenfallen, und die zweite Dreheinheit 4.2 nach unten, in x-Richtung, gesenkt, bis der Drehblock 6 fest eingespannt ist.

Die erfindungsgemässe Haltevorrichtung 1 wird vorzugsweise zwischen zwei Formaufspannplatten 7.1, 7.2 einer (weiter nicht dargestellten) Spritzgiessmaschine eingesetzt. Dabei ist vorzugsweise eine Formaufspannplatte 7.1 fest mit der Maschine verbunden, die andere Formausfspannplatte 7.2 durch die Holmen 3.11, 3.12, 3.21, 3.22 linear geführt und in derselben Richtung z wie die Verschiebeeinheiten 2.1, 2.2 der Haltevorrichtung 1 verschiebbar. Diese Verschiebung wird durch (nicht dargestellte) Antriebsmittel bewirkt. Die Verschiebeeinheiten 2.1, 2.2 sind mittels hydraulischer, mechanischer oder elektritscher Antriebsmittel 21.11, 21.12 (nicht sichtbar) und 21.21, 21.22 gegenüber der verschiebbaren Formaufspannplatte 7.2 verschiebbar; die Antriebsmittel 21.11, 21.12, 21.21, 21.22 greifen an Angriffsstelen 22.11, 22.12, 22.21, 22.22 an den Verschiebeeinheiten 2.1, 2.2 an. Die Verschiebung der Verschiebeeinheiten 2.1,2.2 wird hydraulisch, mechanisch oder elektrisch betätigt und mit einem (nicht dargestellten) hydraulischen, mechanischen oder elektronischen Wegmesssystem kontrolliert oder gesteuert. Das Wegmesssystem sorgt dafür, dass bei eingespanntem Drehblock 6 die an derselben Verschiebeeinheit 2.1 bzw. 2.2 angreifenden Antriebsmittel 21.11 , 21.12 bzw. 21.21, 21.22 stets gleichzeitig und parallel zueinander wirken. Die beiden Verschiebeeinheiten 2.1, 2.2 sind jedoch unabhängig voneinander ansteuerbar und verschiebbar, um ein schnelles Auswechseln des Drehblocks zu ermöglichen.

Mindestens eine, vorzugsweise aber zwei oder mehr Seitenflächen 60.3, 60.5 des prismatischen Drehblocks 6 tragen mindestens eine erste Formhälfte 61.1, 61.2 mit je einem ersten Formeinsatz 63.1, 63.2; der prismatische Drehblock 6 dient also als Formträger. Die Formaufspannplatten 2.1, 2.2 tragen je eine zweite Formhälfte 62.1, 62.2 mit je einem zweiten Formeinsatz 64.1, 64.2. Erste Formeinsätze 63.1, 63.2 und/oder zweite Formeinsätze 64.1, 64.2 sind mit (in Fig. 1 und 2 nicht dargestellten) formgebenden Hohlräumen ausgestattet. Wenn die Formaufspannplatten 7.1, 7.2 mit Hilfe der Antriebsmittel gegen den Drehblock 6 gepresst werden, fügen sich die ersten und zweiten Formhälften 61.1, 61.2, 62.1, 62.2 bzw. Formeinsätze 63.1, 63.2, 64.1, 64.2 zu Spritzgiessformen zusammen, in welche aus Einspritzstationen 71.1, 71.2 Schmelze eingespritzt werden kann. Zur eindeutigen gegenseitigen Positionierung der ersten und zweiten Formhälften 61.1, 61.2, 62.1, 62.2 sind diese vorzugsweise mit Führungen, bspw. Zylinderstiften 65.16 und entsprechenden Bohrungen 66.14, ausgestattet.

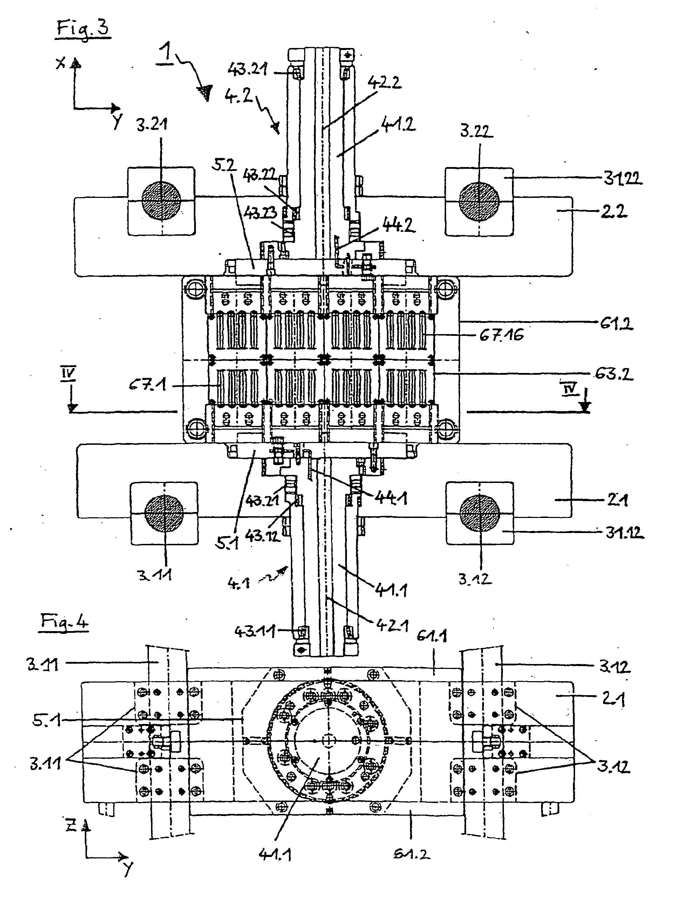

Figur 3 zeigt eine Frontalansicht einer Ausführungsform der erfindungsgemässen Haltevorrichtung, welche von derjenigen der Figuren 1 und 2 leicht verschieden ist. Figur 4 zeigt eine Draufsicht auf einen Teil der Haltevorrichtung von Fig. 3. In dieser Ausführungsform sind die Linearführungen 31.11, 31.12, 31.21, 31.22 für die Holmen 3.11, 3.12, 3.21, 3.22 an Aussenseiten 23.1, 23.2 der Verschiebeeinheiten 2.1. 2.2 angebracht. Die Dreheinheiten 4.1, 4.2 sind mittels Lager 43.1113, 43.2123 auf den jeweiligen Verschiebeeinheiten 2.1, 2.2 drehbar gelagert.

Durch entsprechende Kanäle oder Leitungen 44.1, 44.2 in der ersten Welle 41.1 und/oder der zweiten Welle 41.2 werden Medien wie Gase, Flüssigkeiten oder elektrischer Strom zum Drehblock 6 geführt. Dabei ist es vorteilhaft, Fluide wie Gase und/oder Flüssigkeiten durch die erste, unten angebrachte Welle 41.1 und den elektrischen Strom durch die zweite, oben angebrachte Welle 41.2 zu fuhren, um unerwünschte elektrische Kontakte und Verunreinigungen bei Lecks zu vermeiden. Zwischen den Haltemitteln 5.1, 5.2 und dem Drehblock 6 sind (nicht dargestellte) normierte Schnittstellen für die Übergabe der Medien vorgesehen. In der offenen Formhälfte 61.2 sind formgebenden Hohlräume 67.116 für die Aufnahme von Schmelze sichtbar.

Die Erfindung ermöglicht dem Fachmann auch die Realisierung anderer Ausführungsformen, als hier beschrieben sind. So könnten die Haltemittel 5.1, 5.2 bspw. in x-Richtung relativ zueinander verschiebbar sein.

## Patentansprüche

1. Haltevorrichtung (1) für mindestens eine Form, Formhälfte (61.1, 61.2) oder einen Formträger (6) in einer Spritzgiessmaschine mit einer festen ersten Formaufspannplatte (7.1) und einer verschiebbaren zweiten Formaufspannplatte (7.2), die mittels vier parallelen Holmen (3.11, 3.12, 3.21 3.22) in einer ersten Richtung (z) linear geführt ist, beinhaltend
a) eine erste und eine zweite Verschiebeeinheit (2.1, 2.2), welche zwischen der ersten und der zweiten Formaufspannplatte (7.1 , 7.2) angeordnet sind;
b) wobei jede Verschiebeeinheit (2.1, 2.2) durch zwei benachbarte Holmen (3.11, 3.12, 3.21, 3.22) in der ersten Richtung (z) linear geführt ist; **dadurch gekennzeichnet, dass**
c) die erste und die zweite Verschiebeeinheit (2.1, 2.2) je ein Haltemittel (5.1, 5.2) aufweisen, das zum lösbaren Befestigen der Form, Formhälfte (61.1, 61.2) oder des Formträgers (6) dazwischen dient;
d) welche Haltemittel (5.1, 5.2) relativ zueinander verschiebbar sind, derart, dass die Form, Formhälfte (61.1, 61.2) oder der Formträger (6) auswechselbar ist;
e) sowie normierte Schnittstellen, die zur Übergabe von Medien an die mindestens eine Form, Formhälfte (61.1, 61.2) oder Formträger (6) dienen.

2. Haltevorrichtung (1) gemäss Patentanspruch 1, **dadurch gekennzeichnet, dass** jede der Verschiebeeinheiten (2.1, 2.2) durch Antriebsmittel (21.11, 21.12, 21.21, 21.22) unabhängig voneinander entlang der Holmen (3.11, 3.12, 3.21, 3.22) verschiebbar angeordnet sind, derart, dass die Form, Formhälfte (61.1, 61.2) oder der Formträger (6) auswechselbar ist.

3. Haltevorrichtung (1) nach Patentanspruch 2, **dadurch gekennzeichnet, dass** das erste und das zweite Haltemittel (5,1, 5.2) relativ zu einander in einer zweiten Richtung (x), die zur ersten Richtung (z) senkrecht ist, verschiebbar sind, derart, dass die Form, Formhälfte (61.1, 61.2) oder der Formträger (6) eingespannt oder gelöst werden kann.

4. Haltevorrichtung (1) gemäss einem der Patentansprüche 2 oder 3, **dadurch gekennzeichnet, dass** das jede Verschiebeeinheit (2.1, 2.2) eine Dreheinheit (4.1, 4.2) aufweist, die zum Drehen eines Haltemittels (5.1, 5.2) um eine zur ersten Richtung (z) senkrechte Achse (42.1, 42.2) dient.

5. Haltevorrichtung (1) nach Patentanspruch 4, **dadurch gekennzeichnet, dass** eine erste und/oder eine zweite Welle (41.1, 41.2), der ersten, respektive der zweiten Dreheinheit (4.1, 4.2), Kanäle oder Leitungen (44.1, 44.2) aufweist, die zum Durchführen von Medien dienen.

6. Haltevorrichtung (1) nach einem der vorangehenden Patentansprüche, **dadurch gekennzeichnet, dass** ein Haltemittel (5.1,5.2) normierte Schnittstellen für die Übergabe von Medien an eine Form, Formhälfte (61.1, 61.2) oder einen Formträger (6) aufweist.

7. Formträger (6) zum Einsetzen in eine Haltevorrichtung (1) nach Patentanspruch 6 rückbezogen auf Patentanspruch 5,**dadurch gekennzeichnet, dass** der Formträger (6) in der Haltevorrichtung (1) zwischen den Haltemitteln (5.1, 5.2) angeordnet ist und die Übergabe von Medien über normierte Schnittstellen erfolgt, die zwischen dem Formträger (6) und den Haltemitteln (5.1, 5.2) angeordnet sind.

8. Haltevorrichtung (1) gemäss Patentanspruch 1, **dadurch gekennzeichnet, dass** das erste und das zweite Haltemittel (5.1, 5.2) relativ zueinander in einer zweiten Richtung (x), die zur ersten Richtung (z) senkrecht angeordnet ist, verschiebbar sind, derart, dass die Form, Formhälfte (61.1, 61.2) oder der Formträger (6) eingespannt oder gelöst werden kann.

9. Haltevorrichtung (1) nach Patentanspruch 8, **dadurch gekennzeichnet, dass** jede Verschiebeeinheit (2.1, 2.2) eine Dreheinheit (4.1, 4.2) aufweist, die zum Drehen je eines Haltemittels (5.1, 5.2) um eine zur ersten Richtung (z) senkrechte Achse (42.1, 42.2) dient.

10. Haltevorrichtung (1) nach Patentanspruch 9, **dadurch gekennzeichnet, dass** eine erste und/oder eine zweite Welle (41.1, 41.2), der ersten, respektive der zweiten Dreheinheit (4.1, 4.2), Kanäle oder Leitungen (44.1, 44.2) aufweist, die zum Durchführen von Medien dienen.

11. Haltevorrichtung (1) gemäss einem der Patentansprüche 8 bis 10, **dadurch gekennzeichnet, dass** ein Haltemittel (5.1, 5.2) normierte Schnittstellen für die Übergabe von Medien an eine Form, Formhälfte (61.1, 61.2) oder einen Formträger (6) aufweist

12. Formträger (6) zum Einsetzen in eine Haltevorrichtung (1) nach Patentanspruch 11, **dadurch gekennzeichnet, dass** der Formträger (6) in der Haltevorrichtung (1) zwischen den Haltemitteln (5.1, 5.2) angeordnet ist und die Übergabe von Medien über normierte Schnittstellen erfolgt, die zwischen dem Formträger (6) und den Haltemitteln (5.1, 5.2) angeordnet sind.

13. Verfahren zum Einsetzen einer Form, Formhälfte (61.1, 61.2) oder eines Formträgers (6) in eine Haltevorrichtung (1) gemäss einem der vorangehenden Patentansprüche, **dadurch gekennzeichnet, dass**
a) das erste und das zweite Haltemittel (5.1, 5.2) relativ zueinander so weit auseinander geschoben werden, dass das Einsetzen einer Form, Formhälfte (61.1, 61.2) oder eines Formträgers (6) möglich ist,
b) dass dann eine Form, Formhälfte (61.1, 61.2) oder ein Formträger (6) auf das erste Haltemittel (5.1) aufgesetzt wird,
c) dass das erste und das zweite Haltemittel (5.1, 5.2) in eine gegenseitige Lage gebracht werden, dass die Form, Formhälfte (61.1, 61.2) oder der Formträger (6) eingespannt wird.

## Claims

1. A holding device (1) for at least one mould, mould half (61.1, 61.2), or a die holder (6) in an injection moulding machine with a fixed mould holding plate (7.1) and a second displaceable mould holding plate (7.2), which is guided in a linear direction by means of four parallel spars (3.11, 3.12, 3.21, 3.22) in a first direction (z), comprising
a) a first and a second shifting unit (2.1, 2.2), which are arranged between the first and the second mould holding plate (7.1, 7.2);
b) whereby each shifting unit (2.1,2.2) is guided in the first direction (z) by two neighbouring spars (3.11, 3.12, 3.21, 3.22): **characterised in that**
c) the first and the second shifting unit (2.1, 2.2) each have a holding device (5.1, 5.2) which serves to detachably attach the mould, mould half (61.1, 61.2) or the die holder (6);
d) said holding means (5.1,5.2) can be.shifted relative to one another in such a way that the mould, mould half (61.1, 61.2) or the die holder (6) can be exchanged;
e) and standardised interfaces, which serve to transfer facilities to at least one mould, mould half (61.1, 61.2) or die holder (6).

2. Holding device (1) according to claim 1, **characterised in that** each of the shifting units (2.1, 2.2) are arranged by driving means (21.11, 21.12, 21.21, 21.22) so that they can be displaced independently to each other along the spars (3.11, 3.12, 3.21, 3.22) in such a way that the mould, mould half (61.1, 61.2) or the die holder (6) can be exchanged.

3. Holding device (1) according to claim 2, **characterised in that** the first and the second holding mean (5.1, 5.2) can be displaced relative to one another in a second direction (x), which is vertical to the first direction (z) in such a way that the mould, mould half (61.1,61.2) or the die holder (6) can be clamped or released.

4. Holding device (1) according to claims 2 or 3, **characterised in that** each displacement unit (2.1, 2.2) has a rotating unit (4.1, 4.2) which serves to turn the holding means (5.1, 5.2) around an axis (42.1, 42.2) arranged vertical to the first direction (z).

5. Holding device (1) according to with claim 4, **characterised in that** a first and/or second shaft (41.1, 41.2) of the first or the second rotating unit (4.1,4.2) has conduits or lines (44.1, 44.2) which serve to lead through the facilities.

6. Holding device (1) according to one of the preceding claims, **characterised in that** a holding mean (5.1, 5.2) has standardised interfaces for the transfer of facilities to a mould, mould half (61.1, 61.2) or a die holder (6).

7. A die holder (6) for insertion into a holding device (1) according to patent claim 6 referring back to patent claim 5, **characterised in that** the die holder (6) is arranged in the holding device (1) between the holding means (5.1, 5.2), and the transfer of facilities is effected via standardised interfaces which are arranged between the die holder (6) and the holding means (5.1, 5.2).

8. Holding device (1) according to claim 1 **characterised in that** the first and the second holding mean (5.1, 5.2) can be shifted relative to one another in a second direction (x), which is vertical to the first direction (z) in such a way that the mould, mould half (61.1, 61.2) or the die holder (6) can be clamped or released.

9. Holding device (1) according to claim 8 **characterised in that** each displacement unit (2.1, 2.2) has a rotating unit (4.1, 4.2) which serves to turn a holding device (5.1, 5.2) around an axis (42.1, 42.2) arranged vertical to the first direction (z).

10. Holding device (1) according to claim 9 **characterised in that** a first and/or second shaft (41.1, 41.2) of the first respectively the second rotating unit (4.1, 4.2) has conduits or lines (44.1, 44.2) which serve to lead through facilities.

11. Holding device (1) according to one of the claims 8 to 10 **characterised in that** a holding mean (5.1, 5.2) has standardised interfaces for the transfer of facilities to a mould, mould half (61.1, 61.2) or a die holder (6).

12. A die holder (6) for insertion into a holding device (1) according to patent claim 11, **characterised in that** the die holder (6) is arranged in the holding device (1) between the holding means (5.1, 5.2), and the transfer of facilities is effected via standardised interfaces which are arranged between the die holder (6) and the holding means (5.1, 5.2).

13. Process for the insertion of a mould, mould half (61.1, 61.2) or a die holder (6) into a holding device according one of the previous claims **characterised in that**
a) the first and the second holding mean (5.1, 5,2) can be pushed so far apart relative to one anotherthat the insertion of a mould, mould half (61.1, 61.2) or a die holder (6) is possible,
b) that a mould, mould half (61.1, 61,2) or a die holder (6) will then be placed upon the first holding device (5.1).
c) that the first and the second holding mean (5.1, 5.2) is brought into an opposite position so that the mould, mould half (61.1, 61.2) or the die holder (6) is clamped.

## Revendications

1. Dispositif de fixation (1) pour au moins un moule, une moitié de moule (61.1, 61.2) ou porte-moule (6) d'une machine à injection avec un premier plateau d'ablocage de moule fixe (7.1) et un deuxième plateau d'ablocage de moule (7.2) déplaçable, qui est guidé linéairement dans un premier sens (z) au moyen de quatre colonnes (3.11, 3.12, 3.21, 3.22), comportant,
a. une première et une deuxième unité de déplacement (2.1, 2.2), qui sont disposées entre le premier et le deuxième plateau d'ablocage de moule (7.1, 7.2) ;
b. sachant que chaque unité de déplacement (2.1, 2.2) est guidée linéairement dans le premier sens (z) par deux colonnes adjacents (3.11, 3.12, 3.21, 3.22); **caractérisé en ce que**
c. la première et la deuxième unité de déplacement (2.1, 2.2) comportent respectivement un moyen de fixation (5.1, 5.2) qui sert à la fixation amovible du moule, de la moitié de moule (61.1, 61.2) ou du porte-moule (6) ;
d. que les moyens de fixation (5.1, 5.2) sont déplaçables relativement l'un par rapport à l'autre de telle manière que le moule, la moitié de moule (61.1, 61.2) ou le porte-moule (6) peut être remplacé ;
e. ainsi que des interfaces de transmission normées qui servent à la transmission des médiums au moins au seul moule, moitié de moule (61.1, 61.2) ou porte-moule (6).

2. Dispositif de fixation (1) selon la revendication de brevet 1, **caractérisé en ce que** chacune des unités de déplacement (2.1, 2.2) est disposée de manière à pouvoir se déplacer indépendamment des autres sous la commande d'organes d'entraînement (21.11, 21.12, 21.21, 21.22) le long des colonnes (3.11, 3.12, 3.21, 3.22), de telle manière que le moule, la moitié de moule (61.1, 61.2) ou le porte-moule (6) peut être remplacé.

3. Dispositif de fixation (1) selon la revendication de brevet 2, **caractérisé en ce que** le premier et le deuxième moyen de fixation (5.1, 5.2) sont déplaçables relativement l'un par rapport à l'autre dans un deuxième sens (x) disposé perpendiculairement au premier sens (z), de telle manière que le moule, la moitié de moule (61.1, 61.2) ou le porte-moule (6) peut être serré ou desserré.

4. Dispositif de fixation (1) selon l'une quelconque des revendications de brevet 2 ou 3, **caractérisé en ce que** chaque unité de déplacement (2.1, 2.2) comporte une unité de rotation (4.1, 4.2), qui sert à la rotation d'un moyen de fixation (5.1, 5.2) autour d'un axe (42.1, 42.2) perpendiculaire au premier sens (z).

5. Dispositif de fixation (1) selon la revendication de brevet 4, **caractérisé en ce que** un premier et/ou un deuxième arbre (41.1, 41.2) de la première ou respectivement de la deuxième unité de rotation (4.1, 4.2) comporte des,canaux ou des conduits (44.1, 44.2) qui servent au passage des médiums.

6. Dispositif de fixation (1) selon l'une quelconque des revendications de brevet précédentes, **caractérisé en ce que** un moyen de fixation (5.1,5.2) comporte des interfaces de transmission normées qui servent à la transmission des médiums à un moule, une moitié de moule (61.1, 61.2) ou un porte-moule (6).

7. Porte-moule (6) pour l'insertion dans un dispositif de fixation (1) selon la revendication 6 rattachée à la revendication (5) **caractérisé en ce que** le ports-moule (6) est intégré dans le dispositif de fixation (1) entre les moyens de fixation (5.1, 5.2) et que la transmission des médiums est réalisée par l'intermédiaire des interfaces de transmission normées qui sont disposées entre le porte-moule (6) et les moyens de fixation (5.1, 5.2).

8. Dispositif de fixation (1) selon la revendication de brevet 1, **caractérisé en ce que** le premier et le deuxième moyen de fixation (5.1, 5.2) sont déplaçables relativement l'un par rapport à l'autre dans un deuxième sens (x) disposé perpendiculairement au premier sens (z), de telle manière que le moule, la moitié de moule (61.1, 61.2) ou le porte-moule (6) peut être serré ou desserré.

9. Dispositif de fixation (1) selon la revendication de brevet 8, **caractérisé en ce que** chaque unité de déplacement (2.1, 2.2) comporte une unité de rotation (4.1, 4.2), qui, pour chacune d'elle, sert à la rotation d'un moyen de fixation (5.1, 5.2) autour d'un axe (42.1, 42.2) perpendiculaire au premier sens (z).

10. Dispositif de fixation (1) selon la revendication de brevet 9, **caractérisé en ce que** un premier et/ou un deuxième arbre (41.1, 41.2) de la première ou respectivement de la deuxième unité de rotation (4.1, 4.2) comporte des canaux ou des conduits (44.1, 44.2) qui servent au passage des médiums.

11. Dispositif de fixation (1) selon l'une quelconque des revendications de brevet 8 à 10, **caractérisé en ce qu'**un moyen de fixation (5.1, 5.2) comporte des interfaces de transmission normées qui servent à la transmission des médiums à un moule, une moitié de moule (61.1, 61.2) ou un porte-moule (6).

12. Porte-moule (6) pour l'insertion dans un dispositif de fixation (1) selon la revendication 11, **caractérisé en ce que** le porte-moule (6) est intégré dans le dispositif de fixation (1) entre les moyens de fixation (5,1, 5.2) et que la transmission des médiums est réalisée par l'intermédiaire des interfaces de transmission normées qui sont disposées entre le porte-moule (6) et les moyens de fixation (5.1, 5.2).

13. Procédé pour la mise en place d'un moule, d'une moitié de moule (61.1, 61.2) ou d'un porte-moule (6) dans un dispositif de fixation (1) selon l'une quelconque des revendications de brevet précédentes,
**caractérisé en ce que**
a. le premier et le deuxième moyen de fixation (5.1,5.2) s'éloignent relativement l'un de l'autre de telle manière que la mise en place d'un moule, d'une moitié de moule (61.1, 61.2) ou d'un porte-moule (6) est possible.
b. un moule, une moitié de moule (61.1, 61.2) ou un porte-moule (6) est alors embroché sur le premier moyen de fixation (5.1).
c. le premier et le deuxième moyen de fixation (5.1, 5.2) sont amenés à des positions opposées de manière à serrer le moule, la moitié de moule (61.1, 61.2) ou le porte-moule (6).
